# EUROPÄISCHE PATENTSCHRIFT

(11) **EP 0 392 297 B1**
(45) Veröffentlichungstag und Bekanntmachung des Hinweises auf die Patenterteilung: **31.08.1994**
(21) Anmeldenummer: 90106209.1
(22) Anmeldetag: 31.03.1990
(51) Int. Cl.: B32B 31/12, B32B 31/04

(54) **Verfahren zum Verbinden flächenhafter Gebilde mittels wärmeaktivierbarer Klebefolie**
Process for assembling flat structures by means of a heat activable adhesive foil
Procédé pour assembler des objets de forme plane au moyen d'une feuille adhésive susceptible d'être activée par la chaleur

(30) Priorität: 08.04.1989 DE 3911613
(43) Veröffentlichungstag der Anmeldung: 17.10.1990
(73) Patentinhaber: AUDI AG, 85045 Ingolstadt (DE)
(72) Erfinder: Bauer, Hans, D-8070 Ingolstadt (DE)
(74) Vertreter: Geissler, Manfred

(56) Entgegenhaltungen:
- EP-A- 0 178 812
- CH-A- 661 897

## Beschreibung

Die Erfindung bezieht sich auf ein Verfahren zum Verbinden flächenhafter Gebilde mittels wärmeaktivierbarer Klebefolie.

In der Praxis ist es bekannt, flächenhafte Gebilde, z. B. Folien, dünnwandige Tiefziehteile usw. mittels wärmeaktivierbarer Klebstoffe zu verbinden. In der Automobilindustrie findet diese Arbeitsweise beispielsweise Anwendung bei der Herstellung von Kraftfahrzeug-Innenausstattungen, wie beispielsweise bei der Folien- oder Stoffkaschierung von Türseitenverkleidungen, Armaturentafeln usw.. Dabei wird einer der beiden zu verbindenden Teile z. B. im Sprühverfahren oder mittels Walzen mit einem Lösungsmittelklebstoff oder Dispersionsklebstoff versehen, wobei nach dem Ablüften des Lösungsmittels bzw. Wassers der Klebstoff keine Klebefähigkeit mehr besitzt und erst zum Zeitpunkt der Verarbeitung durch Zuführen von Wärme wieder aktiviert wird und die dann zusammengefügten Teile miteinander verkleben kann. Zu diesem Zweck ist es erforderlich, den Klebstoff auf Temperaturbereiche von mindestens 50 bis 60° C zu erwärmen.
Die Einsatzmöglichkeiten solcher Klebstoffe sind sehr weitreichend, da die zu verbindenden Teile die oben genannte Aktivierungstemperatur in aller Regel problemlos ertragen können, ohne daß nachteilige Folgen entstünden.

Von Nachteil ist allerdings, daß eben dieser Klebstoff zunächst auf einen der Teile aufgebracht werden muß, welcher z. B. bei einer Textilstoff-Verklebung überdies zuvor an der betreffenden Oberfläche in der Regel mit einer undurchlässigen Trennfolie kaschiert werden muß, um ein Eindringen des Klebstoffes in den Teile-Werkstoff zu verhindern. Auch der Klebstoff-Ablüftvorgang sowie die dafür notwendigen Einrichtungen erhöhen die erforderlichen Produktionsflächen sowie die Produktionskosten insgesamt und belasten bei der Verwendung von Lösungsmittelklebstoff überdies die Umwelt.

In der DE 24 62 698 C2 ist beispielsweise eine Vorrichtung zum Aufbringen einer transparenten, bereits mit einer wärmeaktivierbaren Klebstoffschicht versehenen Schutzfolie auf ein blattförmiges Substrat beschrieben, mit dem Ziel, bei geringem Energieverbrauch die Schutzfolie in kürzester Zeit auf die eine ausreichende Klebefähigkeit sicherstellende Temperatur zu erwärmen.

Die DE 35 19 064 A1 beschreibt eine mehrschichtige, selbstklebende und tiefziehbare Schutzfolie, insbesondere für die Innen- und Außenausstattung von Kraftfahrzeugen, bei der sich ebenfalls bereits eine selbstklebende, allerdings nicht wärmeaktivierbare Haftschicht auf der Schutzfolie befindet, wobei diese Haftschicht darüberhinaus noch von einer Abdeckfolie abgedeckt ist.

Aus der DE 34 19 249 C2 geht ein Verfahren zum flächigen Verkleben von Kaschierungen und deren Trägerteilen hervor, wobei zwischen Trägerteil und Kaschierung eine Kleberschicht gebildet wird und die Verklebung unter erhöhtem Druck und/oder erhöhter Temperatur erfolgt. Es wird eine Verbundschicht aus einer kleberimprägnierten, offenporigen Schaumstoffschicht und einer Kaschierungsschicht mit Hilfe eines Heizkastens, der beispielsweise eine Strahlungsheizung enthalten kann, erwärmt und in diesem Zustand einer nachgeordneten Kaschiereinrichtung zugeführt. Der vorherige Erwärmungsvorgang bewirkt, daß der Kaschierungskleber bereits eine gewisse Aktivierung erfährt und daher in einen den Kaschierungsprozeß fördernden Zustand versetzt wird.

Im Stand der Technik ist überdies für diverse Anwendungsfälle die Verwendung von wärmeaktivierbaren Klebefolien bekannt. Diese Klebefolien werden in der Regel vor der Herstellung der eigentlichen Klebeverbindung auf eines der zu verbindenden flächigen Gebilde aufgebracht (kaschiert) und bilden selbst die Klebeschicht.
Die mit dem Einsatz solcher Klebefolien verbundenen Vorteile sind beachtlich. So entfällt beispielsweise der Arbeitsschritt des Klebstoffauftrages (z. B. durch Aufsprühen), eine ggf. damit einhergehende Lösungsmittelbelastung der Umwelt tritt nicht auf, der Produktionsprozeß wird kostengünstiger, da u. a. auch auf die bereits oben erwähnte Trennfolie verzichtet werden kann.

Der Bericht "Verbinden mit Klebstoff-Folie" aus - Technische Rundschau Nr. 9, 1. März 1983, Seite 11 - beschreibt diese neue Klebetechnologie anhand verschiedener Anwendungsfälle. Vor dem Verkleben zweier Verbindungspartner wird die Klebefolie auf einen der beiden aufgebracht. Dies wird als Vorkonfektionierung bezeichnet, die mit Wärme oder einem geeigneten Lösungsmittel vorgenommen werden kann. Die Vorkonfektionierung mittels Wärme sowie der spätere eigentliche Verbindungsvorgang durch Heißverpressen erfolgen jeweils in Temperaturbereichen zwischen 120°C und 200°C oder bei noch höheren Verarbeitungstemperaturen.

Der wesentliche Nachteil bei der Verwendung von Klebefolie ist darin zu sehen, daß die Aktivierungstemperatur zur Herbeiführung der Klebefähigkeit dieser Klebefolien sehr hoch ist (mindestens 110 bis 130° C bei den in Handel erhältlichen Klebefolien), was zur Folge hat, daß die Einsatzmöglichkeiten sehr eingeschränkt sind, weil meist zumindest eines der zu verbindenen flächigen Gebilde einer solchen Wäremebelastung nicht schadlos ausgesetzt werden kann.

Es ist daher die Aufgabe der Erfindung, ein Verfahren zum Verbinden flächenhafter Gebilde mittels wärmeaktivierbarer Klebefolien aufzuzeigen, durch das die Ensatzmöglichkeiten von Klebefolien wesentlich erweitert werden kann.

Dies gelingt erfindungsgemäß mit einem Verfahren, welches durch die Merkmale des Patentanspruches 1 gekennzeichnet ist.

Die Erfindung beruht auf der Erkenntnis, daß durch eine Voraktivierung der Klebefolie die bei ihrer späteren Verarbeitung erforderliche Verklebungstemperatur beträchtlich abgesenkt werden kann (z. B. auf ca. 60 bis 70° C), ohne daß dadurch die Güte der Klebeverbindung gemindert wäre. Diese Voraktivierung erfolgt durch kurzzeitiges Aufheizen der Klebfolie z. B. auf etwa 110 bis 130° C, d. h. auf die ansonsten für die Verarbeitung erforderliche Aktivierungstemperatur. Bei der Verwendung von Folien , die höhere Aktivierungstemperaturen benötigen, ist die Voraktivierungstemperatur natürlich entsprechend zu wählen.

Die Anmelderin führte verschiedene Versuche mit diversen Klebefolien der herstellenden Firmen Beiersdorf und Atochem (z. B. Klebefolie Platilon UO2) durch, wobei stets nach der erfolgten Voraktivierung der vorbeschriebene Effekt auftrat. Dieser Voraktivierungseffekt hält, wie weitere Versuche gezeigt haben, mindestens etliche Monate an, d. h., daß die eigentliche Verarbeitung der Klebefolie bei abgesenkter Verklebungstemperatur noch mehrere Monate nach der Voraktivierung erfolgen kann.

Als besonders vorteilhaft hat sich erwiesen, die Voraktivierung jeweils bei der Temperatur vorzunehmen, die vom Folienhersteller als die eigentliche Verklebungstemperatur empfohlen wird.

Sinnvoll ist es, die Klebefolie bereits seitens des Teile-Zulieferers auf einen der Teile aufzubringen (soweit die Wärmebelastbarkeit dies zuläßt), z. B. aufzukaschieren und dabei vorzuaktivieren. Der so vorbereitete Teil mit aufgebrachter und bereits voraktivierter Klebefolie kann dann an den eigentlichen Produktionsstandort (z. B. Automobilhersteller) angeliefert werden, wo letztlich die Verbindung der zu verklebenden Teile (z. B. zur Herstellung eines Kraftfahrzeug-Innenausstattungselementes) vorgenommen werden kann.

Wendet man zum Aufbringen der Klebefolie auf eines der zu verbindenden flächigen Gebilde bestimmte, in der Praxis geläufige Verfahren an, nämlich das Flammkaschieren oder das Thermokaschieren, so kann dabei der Voraktivierungsvorgang problemlos und ohne größeren Aufwand einbezogen werden. In der Zeichnung ist dies dargestellt. Sie zeigt in
- Fig. 1: die Integration der erfindungsgemäßen Voraktivierung in ein Flammkaschierverfahren und
- Fig. 2: die entsprechende Integration der Voraktivierung in ein Verfahren zum Aufbringen der Klebefolie auf eines der zu verbindenen flächigen Gebilde über eine Thermokaschierung.

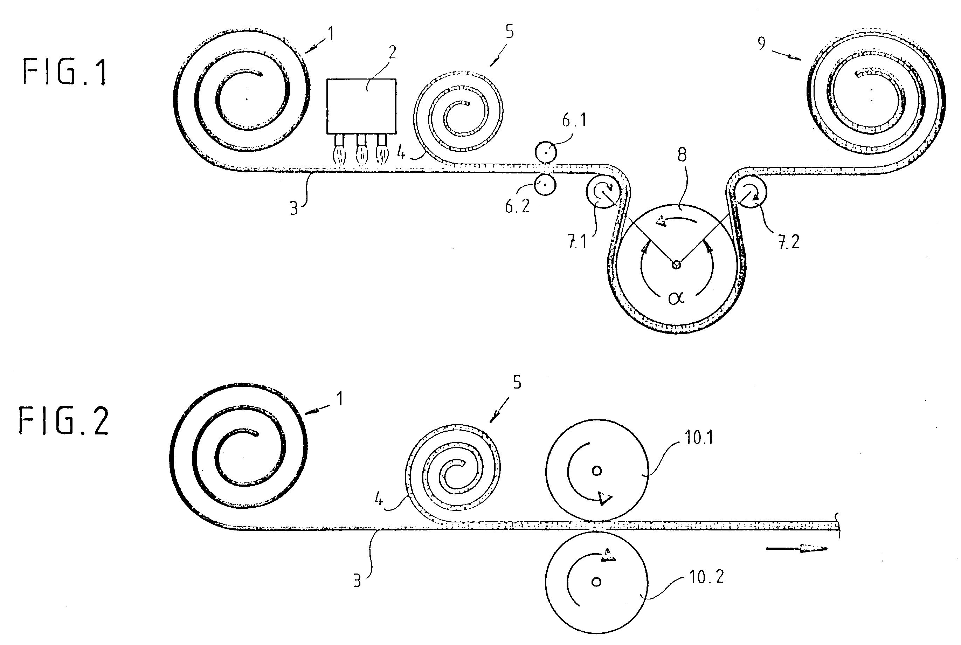

Die in Fig. 1 schematisiert gezeigte Flammkaschierung ist grundsätzlich ein recht preiswertes Arbeitsverfahren, um verschiedene flächige Gebilde miteinander zu verbinden. Einer der Ausgangswerkstoffe der im späteren Produktionsprozeß über eine flächige Klebeverbindung miteinander zu verbindenen Teile liegt als ein zu einem Coil 1 aufgewickeltes Band 3 vor. Dieses wird abgespult und an einem Flammofen 2 vorbeigeführt, wo über eine offene Flamme die Oberfläche des Bandes 3 angeschmolzen wird. Unmittelbar nach Durchlaufen des Flammofens 2 wird eine Klebefolie 4 dem Band 3 zugeordnet, die damit aber keine besondere Erwärmung mehr erfährt. Auch die Klebefolie 4 wird von einem Coil 5 abgewickelt.

Nachdem Band 3 und Klebefolie 4 übereinandergelegt und für den Kaschiervorgang zwischen zwei Kaschierwalzen 6.1,6.2 hindurchgeführt worden sind, wird dieser Verbund unter Zuhilfenahme zweier Führungswalzen 7.1,7.2 um eine beheizbare mittlere Walze 8 herumgeführt. Durch geeignete Wahl des Umschlingungswinkels α und des Walzendurchmessers läßt sich der für die Voraktivierung notwendige zeitliche Wärmekontakt der Klebefolie 4 mit der Walze 8 erreichen, da beim Flammkaschieren die Bandgeschwindigkeit recht hoch ist (ca. 20m/sec.). Denkbar wäre z. B. auch eine Voraktivierung über Infrarot-Strahler, welche der Flammkaschierung nachgeschaltet werden.

Um zu verhindern, daß die Klebefolie 4 während des Voraktivierens an der beheizten Walze 8 kleben bleibt, kann auf der entsprechenden Oberfläche der Klebefolie 4 eine Trennschicht (beispielsweise Polyetylen-Folie) aufgebracht sein.
Nach erfolgter Voraktivierung wird das Band 3 wieder zu einem Coil 9 gewickelt, um danach an die Produktionsstätte gebracht zu werden, wo es zu den einzelenen Teilen in den geforderten Abmessungen geschnitten und diese dann mit den jeweils anderen Teilen flächig verklebt werden. Dies kann beispielsweise während eines Teile-Tiefziehvorganges erfolgen, der bei der reduzierten Klebefolien-Aktiverungstemperatur (z. B. 60 - 70° C) abläuft.

Selbstverständlich wird, wie bereits erwähnt, für den Kaschier- bzw. Voraktivierungsvorgang der Bauteilwerkstoff ausgewählt, der thermisch höher belastbar ist, mithin also die erforderliche Voraktivierungstemperatur ohne Schaden zu nehmen aushalten kann.

Bei der in Fig. 2 dargestellten Thermokaschierung liegt der eine Bauteilwerkstoff wiederum als zu dem Coil 1 aufgewickelten Band 3 vor. Gleiches gilt für die aufzukaschierende, ebenfalls zu einem Coil 5 gewickelte Klebefolie 4. Nachdem das Band 3 und die Klebefolie 4 übereinandergelegt sind, durchläuft dieser Verbund ein beheiztes Walzenpaar 10.1,10.2, über das gleichzeitig die Aufkaschierung der Klebefolie 4 auf das Band 3 und ihre Voraktivierung herbeigeführt werden kann. Um allerdings in diesem Falle die erforderliche Voraktivierungstemperatur über die notwendige Zeitspanne in die Klebefolie 4 einbringen zu können, kann es trotz der relativ geringen Bandgeschwindigkeit von ca. 5 - 8 m/sec. ggf. erforderlich sein, das Walzenpaar 10.1,10.2 um weitere, nachgeschaltete und ebenfalls beheizte Walzenpaare zu ergänzen.

Das Band 3 kann danach wiederum zu einem Coil aufgewickelt oder aber gleich einer Beschnittstation zugeführt werden, wo die Teile ausgestanzt werden. Um auch in diesem Falle zu verhindern, daß die Klebefolie 4 während des Voraktivierungsvorganges an der Walze 10.1 kleben bleibt, ist es erforderlich, die entsprechende Oberfläche der Klebefolie 4 mit einer geeigneten Trennfolie bzw. Abdeckfolie zu versehen. Für die weitere Verarbeitung gelten die in Zusammenhang mit Fig. 1 gemachten Ausführungen.

Sollte keiner der zu verbindenen Teile-Werkstoffe die thermische Belastung durch die Voraktivierung ohne Schaden zu nehmen ertragen können, so wäre eine separate Voraktivierung der Klebefolie 4 vor deren Aufkaschieren auf einem der zu verbindenden Teile erforderlich. Auch dies ist problemlos zu bewerkstelligen.

In einem Konkreten Anwendungsfall für Kraftfahrzeug-Innenausstattungselemente könnten die mittels der wärmeaktivierbaren Klebefolie 4 miteinander zu verklebenden flächigen Gebilde beispielsweise ein Kunststoff- (z. B. ABS) Türseitenträger sein, auf den aus optischen Gründen eine mit einer attraktiven Prägung versehene Weichschaumfolie (PVC) aufgebracht wird. Auch auf das Aufbringen eines thermisch besonders empfindlichen Stoffeldes auf einen solchem Türseitenträger läßt sich der Anwendungsbereich der Klebefolie nun erstrecken, da aufgrund der Voraktivierung die eigentliche Verklebungstemperatur nun wesentlich geringer sein kann.

## Patentansprüche

1. Verfahren zum Verbinden flächenhafter Gebilde mittels wärmeaktivierbarer Klebefolie, **dadurch gekennzeichnet,** daß die Klebefolie (4) vor ihrer Verarbeitung einer Voraktivierung unterzogen wird, die bei einer Temperatur erfolgt, die im Bereich der folienspezifischen Aktivierungstemperatur liegt, und daß die spätere Verarbeitung bei einer Temperatur unterhalb dieser folienspezifischen Aktivierungstemperatur erfolgt.

2. Verfahren nach Patentanspruch 1, **gekennzeichnet durch** eine Voraktivierungstemperatur von ca. 110°C bis 130°C und einer Verarbeitungstemperatur von ca. 60°C bis 70°C.

3. Verfahren nach Patentanspruch 1, **dadurch gekennzeichnet,** daß bereits vor dem Verbinden der flächenhaften Gebilde die Klebefolie (4) auf eines (3) der flächenhaften Gebilde aufgebracht (aufkaschiert) wird, wobei auch die Voraktivierung erfolgt.

4. Verfahren nach Patentanspruch 3, **dadurch gekennzeichnet,** daß das Aufbringen der Klebefolie (4) mittels Flammkaschieren erfolgt, wonach der Verbund aus Klebefolie (4) und dem zu diesem Zeitpunkt noch als Band (3) vorliegenden flächigen Gebilde zum Voraktivieren über einen vorgegebenen Umschlingungswinkel (α) um eine nachgeschaltete beheizte Walze (8) herumgeführt wird oder die Voraktivierung durch Infrarotbestrahlung erfolgt.

5. Verfahren nach Anspruch 3, **dadurch gekennzeichnet,** daß das Aufbringen der Klebefolie (4) mittels Thermokaschieren erfolgt, wobei der Verbund aus Klebefolie (4) und dem zu diesem Zeitpunkt noch als Band (3) vorliegenden flächigen Gebilde zwischen einer Anzahl beheizbarer Walzenpaare (10.1,10.2) hindurchgeführt wird.

## Claims

1. Process for joining two-dimensional structures by means of thermally activatable adhesive film, characterised in that before it is processed the adhesive film (4) undergoes pre-activation at a temperature within the range of the activating temperature specific to the film, and that the subsequent processing takes place at a temperature below this film-specific activation temperature.

2. Process according to claim 1, characterised by a pre-activation temperature of approx. 110°C to 130°C and a processing temperature of approx. 60°C to 70°C.

3. Process according to claim 1, characterised in that even before the two-dimensional structures are joined, the adhesive film (4) is applied to (laminated onto) one (3) of the two-dimensional structures and pre-activation also takes place.

4. Process according to claim 3, characterised in that the adhesive film (4) is applied by means of flame lamination, after which the composite made up of the adhesive film (4) and the two-dimensional structure, which at this stage is still in the form of a tape (3), is guided at a preset angle of contact (α) around a downstream heated roll (8) to pre-activate it, or else is pre-activated using infra-red irradiation.

5. Process according to claim 3, characterised in that the adhesive film (4) is applied by means of heat lamination, and the composite made up of the adhesive film (4) and the two-dimensional structure, which at this stage is still in the form of a tape (3), is guided between a number of pairs of heatable rolls (10.1, 10.2).

## Revendications

1. Procédé d'assemblage d'articles plats au moyen d'une feuille de collage activable par la chaleur, caractérisé en ce qu'avant sa mise en oeuvre, la feuille de collage (4) est soumise à une pré-activation, effectuée à une température qui se situe dans la zone de la température d'activation spécifique de la feuille, et en ce que la mise en oeuvre ultérieure est effectuée à une température inférieure à cette température d'activation spécifique de la feuille.

2. Procédé selon la revendication 1, caractérisé par une température de pré-activation de l'ordre de 110°C à 130°C et par une température de mise en oeuvre de l'ordre de 60°C à 70°C.

3. Procédé selon la revendication 1, caractérisé en ce qu'avant l'assemblage des articles plats, la feuille de collage (4) est déjà appliquée (contrecollée) sur l'un (3) des articles plats, la pré-activation étant effectuée en même temps.

4. Procédé selon la revendication 3, caractérisé en ce que l'application de la feuille de collage (4) est effectuée par contrecollage à la flamme, le stratifié de la feuille de collage (4) et de l'article plat, qui se présente encore sous forme de bande (3) à ce moment, passant, en vue de la pré-activation, autour d'un cylindre chauffé (8) disposé en aval, sur un angle d'enroulement (α) prédéfini, ou bien la pré-activation étant effectuée par exposition aux rayons infrarouges.

5. Procédé selon la revendication 3, caractérisé en ce que l'application de la feuille de collage (4) est effectuée par thermocontrecollage, le stratifié de la feuille de collage (4) et de l'article plat, qui se présente encore sous forme de bande (3) à ce moment, passant entre plusieurs paires de cylindres chauffables (10.1, 10.2).
